# EUROPEAN PATENT APPLICATION

(11) **EP 4 548 791 A1**
(43) Date of publication of application: **07.05.2025**
(21) Application number: 24275118.8
(22) Date of filing: 30.10.2024
(51) Int. Cl.: A41H 37/00

(54) **IMPROVEMENTS IN OR RELATING TO LOADING A FABRIC ATTACHMENT HARDWARE ELEMENT**

(30) Priority: 01.11.2023 GB 202316723
(71) Applicant: We Print Gifts Ltd, Long Eaton, Nottinghamshire NG10 1LZ (GB)
(72) Inventor: BARROW,, Peter, Long Eaton, NG10 1LZ (GB); HUMPHREYS,, Malcolm Edwin, Long Eaton, NG10 1LZ (GB)
(74) Representative: Potter Clarkson

(57) **Abstract**

An automated loading apparatus 10 for loading a fabric attachment hardware element 1 to a rotator holder apparatus 34 for positioning the attachment hardware element 1 ready for attachment to a fabric. The attachment hardware element 1 has at least one opening 2 for securing the attachment hardware element 1 to the fabric. The loading apparatus comprises a receiving member 18 and a loading arm 30. The receiving member 18 includes support members 22a, 22b positioned relative to one another to create a channel 24 that receives and retains an attachment hardware element 1, wherein at least one of the support members 22a, 22b is a moveable support member 22b. The loading arm 30 is moveable laterally relative to the receiving member 18 and configured to, in use, contact the attachment hardware element 1 to move the attachment hardware element 1 towards a rotator holder apparatus 34, the loading arm 30 further configured to, upon its movement of the attachment hardware element 1 towards the rotator holder apparatus 34, contact the or each moveable support member 22b to dislodge the or each moveable support member 22b and release the attachment hardware element 1 from the channel 24 so as to permit movement of the attachment hardware element 1.

## Description

This invention relates to an automated loading apparatus for loading a fabric attachment hardware element to a rotator holder apparatus for positioning the attachment hardware element ready for attachment to a fabric. The invention also relates to an automated loading and rotating assembly, and to a method for loading an attachment hardware element to a rotator holder apparatus.

It is known to secure a fabric attachment hardware element to a textile or fabric so as to provide the textile with an attachment hardware element for use in a desired manner. For example, the attachment hardware element may be a clasp or other form of clip that is used to selectively attach and detach the ends of a strip of fabric. One such example is a safety breakaway coupling (also referred to as a safety release) which is attached to both ends of a fabric strip so as to form a lanyard for wearing around a user's neck. The safety breakaway coupling is formed to safely breakaway from the neck if the lanyard is pulled. The lanyard may be used for a number of purposes such as for holding: an identification badge, a conference or event badge, keys or smart card or a whistle.

The attachment hardware element is typically a non-fabric element, such as one made from plastics or metals, but this may not be the case.

According to a first aspect of the invention there is provided an automated loading apparatus for loading a fabric attachment hardware element to a rotator holder apparatus for positioning the attachment hardware element ready for attachment to a fabric, the attachment hardware element having at least one opening for securing the attachment hardware element to the fabric, the loading apparatus comprising:
a receiving member including support members positioned relative to one another to create a channel in which the attachment hardware element is received and retained in use, wherein at least one of the support members is a moveable support member; and
a loading arm moveable laterally relative to the receiving member and configured to, in use, contact the attachment hardware element to move the attachment hardware element towards a rotator holder apparatus, the loading arm further configured to, upon its movement of the attachment hardware element towards the rotator holder apparatus, contact the or each moveable support member to dislodge the or each moveable support member and release the attachment hardware element from the channel so as to permit movement of the attachment hardware element.

Such an arrangement permits the automation of the loading of the attachment hardware element into a rotator holder apparatus for positioning the attachment hardware element ready for attachment to a fabric. Previously, such loading would have been done by hand which is labour intensive and inefficient.

Moreover, the receiving member creating a channel allows for the attachment hardware element to be held in position in the channel ready for contact with the loading arm. In addition, the inclusion of the or each moveable support member permits the loading arm to move the attachment hardware element laterally out of the channel and towards the rotator holder apparatus without the need for the attachment hardware element to be picked up out of the channel first. This saves on automated process steps and therefore saves on time and increases efficiency of the loading apparatus.

It will be understood that "automated" means that the apparatus is able to operate through the necessary steps without human intervention with the physical components (there may be human intervention occurring remotely to control some of the components and/or intervention if there is a failure).

Preferably, the loading arm is configured to contact the attachment hardware element, in use, at an opening of the attachment hardware element so as to move the attachment hardware element towards the rotator holder apparatus.

Such an arrangement means that an existing part of the attachment hardware element is utilised in the loading apparatus. For example, the loading arm may be configured to insert a portion thereof into the opening of the attachment hardware to enable the loading arm to contact and essentially grip onto the attachment hardware so as to move it towards the rotator holder apparatus.

Optionally, the loading apparatus further includes a contact member positioned relative to the receiving member to contact the attachment hardware element when it is being moved by the loading arm to provide resistance to the attachment hardware element in the opposite direction of movement of the loading arm.

The contact member helps to push the attachment hardware element onto the loading arm when it is moving the attachment hardware element towards the rotator holder apparatus. This helps to ensure that the contact of the loading arm to the attachment hardware element has been made. It is understood that the resistance provided by the contact member does not interfere with the movement of the loading arm (i.e. the resistance force does not exceed the force of the loading arm).

The moveable support member may be biased to be in position relative to the or each other support members to create the channel.

Such an arrangement means that the moveable support member returns to position to create the channel after the force of the loading arm is removed, ready for the next attachment hardware element.

Optionally, the loading apparatus further includes a sensor positioned relative to the receiving member and configured to detect the passing of the attachment hardware element as it enters the channel. The sensor may have the additional ability to detect when attachment hardware has become lodged in front of the sensor (which would cause a jam in the apparatus) allowing the machine to pause automation and alert the operator.

The inclusion of such a sensor allows for smooth and continuous automation of the loading apparatus. Depending on the type of sensor used, it may also help to indicate where two attachment hardware elements have erroneously entered the receiving member.

In one embodiment, the support members of the receiving member may be positioned relative to one another so as to create a substantially vertical channel, such that the attachment hardware element is received in a vertical position.

Preferably, the loading arm is configured to move the attachment hardware element outwards and away from the vertical channel.

The vertical positioning of the attachment hardware element is desired for the onward movement of the attachment hardware element towards the rotator holder apparatus. This positioning also makes is easier for the loading arm to contact the attachment hardware element, especially at its opening. It will be understood that any reference to vertical or horizontal or other is a reference to the position relative to the apparatus, e.g. the vertical position is substantially aligned with the height direction of the apparatus and the horizontal position is substantially aligned with the length of the apparatus. Another way to describe it is that the attachment hardware element is considered to be in an upright or upstanding position when it is in the vertical position, and it is considered to be in a flat or lying position when it is in the horizontal position.

Optionally, the loading apparatus further includes a conveying mechanism configured to convey an attachment hardware element along a loading path towards the receiving member, wherein the conveying mechanism is oriented substantially horizontally and the receiving member is orientated substantially vertically relative to one another.

In other words, the conveying mechanism and the receiving member are substantially perpendicular to one another. It will be understood that, in some embodiments, the attachment hardware element would be loaded from a flat/horizontal position on the conveying mechanism to an upwards/vertical position in the vertical channel of the receiving member.

The conveying mechanism and the loading arm may be positioned substantially parallel with one another, and the receiving member is positioned therebetween.

Such an arrangement helps to reduce the footprint of the loading apparatus since one can be positioned underneath the other.

Indeed, the loading arm may be located beneath the conveying mechanism resulting in a gap between where the attachment hardware element exits the conveying mechanism and where the attachment hardware element enters into position in the channel of the receiving member.

Such an arrangement makes use of gravity to allow or to aid in the loading of the attachment hardware element from the conveying mechanism into the receiving member. In other words, the attachment hardware element is able to drop from the conveying mechanism into the receiving member.

Preferably, the loading apparatus further includes:
a receptacle for holding a plurality of attachment hardware elements in use, and having an entry opening and an exit opening; and
a sorting member positioned at the exit opening of the receptacle and having a series of slots each for receiving a single attachment hardware element in use, the sorting member being moveable to align a given slot with a sorting member exit to dispense the single attachment hardware element for being received by the receiving member.

Such an arrangement allows for automated sorting of the attachment hardware elements for presenting each one in turn to the receiving member.

It will be understood that there may be components between the sorting member and the receiving member which allow it to be received by the receiving member, e.g. the conveying mechanism, but this may not be the case.

The sorting member may further include a pusher configured to push the single attachment hardware element from the given slot when the given slot is aligned with the sorting member exit.

Providing such a pusher helps with the dispensing of the attachment hardware element.

Optionally, the receptacle and sorting member are both positioned at one end of the conveying mechanism opposite to the end at which the receiving member is positioned.

Further optionally, the loading apparatus further includes a guide member positioned between the sorting member exit and the conveying mechanism, the guide member being configured to guide an attachment hardware element along the guide member and onto the conveying mechanism.

Preferably, the guide member includes a guide member portion configured to guide an attachment hardware element along the guide member and onto the conveying mechanism in an orientation in which the attachment hardware element is presented to the receiving member.

Such an arrangement means that the orientation of the attachment hardware element does not need to be changed as it moves along the loading apparatus from the guide member to the receiving member, and therefore reduces the number of steps and increases efficiency of the apparatus.

It will be understood that the orientation of the attachment hardware element is which way round it is "facing", e.g. the orientation of the openings on the attachment hardware element relative to the apparatus. The attachment hardware element can be in a vertical or horizontal position (i.e. it can be upstanding or lying flat) and be in different orientations (e.g. the opening at the front nearest the receiving member or at the back nearest the receptacle or sideways so that the opening is perpendicular to the receiving member).

In one embodiment, the orientation may be a lengthwise orientation in which the length direction of the attachment hardware element extends along the length direction of the conveying mechanism with the opening of the attachment hardware element being in line with the receiving member.

According to a second aspect of the invention there is provided an automated loading and rotating assembly comprising:
an automated loading apparatus as described hereinabove; and
an automated rotator holder apparatus positioned relative to the loading arm to receive an attachment hardware element via the loading arm in use, the rotator holder apparatus including a rotatable holder configured to hold the attachment hardware element in place once received by the loading arm, and configured to rotate so as to present the attachment hardware element in desired orientations to allow securing of a fabric to the attachment hardware element in use.

The features and advantages of the first aspect of the invention apply mutatis mutandis to the features and advantages of the second aspect of the invention.

In addition, the rotator holder apparatus being configured to rotate means that the attachment hardware element can be presented in different orientations to allow attachment of a fabric to the attachment hardware element, e.g. via the openings of the attachment hardware element which may be positioned at opposing ends of the element.

According to a third aspect of the invention there is provided a method for loading a fabric attachment hardware element to a rotator holder apparatus, the attachment hardware element having at least one opening for securing the attachment hardware element to a fabric, the method comprising:
positioning an attachment hardware element in a channel created by support members, wherein at least one of the support members is a moveable support member;
moving a moveable arm relative to the receiving member to contact the attachment hardware element to move the attachment hardware element towards a rotator holder apparatus, and, upon such movement, contacting the or each moveable support member to dislodge the or each moveable support member and release the attachment hardware element from the channel so as to permit movement of the attachment hardware element.

The features and advantages of the first aspect of the invention apply mutatis mutandis to the features and advantages of the third aspect of the invention. It will be understood that the apparatus features of the first aspect of the invention may be reformulated into associated method steps according to the third aspect of the invention.

A preferred embodiment of the invention will now be described, by way of a nonlimiting example, with reference to the accompanying drawings in which:
Figure 1 shows an automated loading apparatus according to the invention;
Figure 2 shows a receiving member portion of the automated loading apparatus of Figure 1;
Figure 3 shows a loading arm portion of the automated loading apparatus of Figure 1;
Figure 4 shows a portion of a rotator holder apparatus that may form part of the invention; and
Figures 5a and 5b show a receptacle portion of the automated loading apparatus of Figure 1.

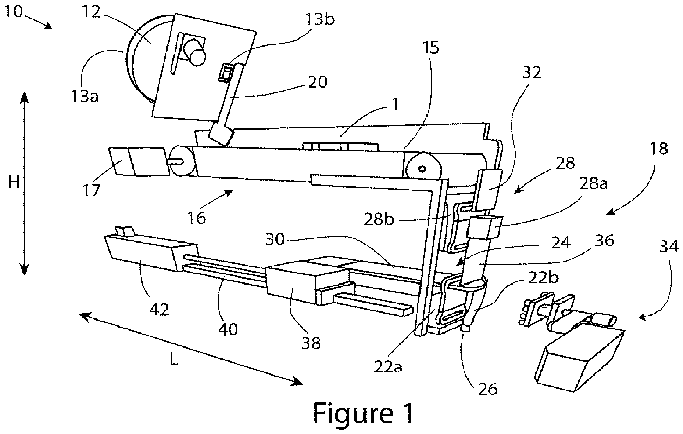

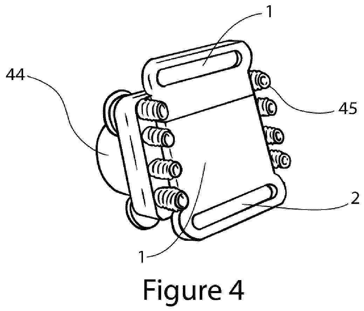

Figures 1 to 5 show an automated loading apparatus 10, in use with a textile attachment hardware element 1, according to the invention. The figures also show the loading apparatus in conjunction with an automated rotator holder apparatus 34, which may also form part of the invention.

The attachment hardware element 1 in this embodiment includes two openings 2 at either end of the element 1. The openings 2 (or "eyes") are the portions which would be secured to a textile, e.g. by looping the textile through each of the eyes and securing it by welding, sonic welding, stitching, adhesive or any other suitable means. The two openings 2 are located at the lengthwise ends of the element 1. In other embodiments, there may fewer or more openings 2.

The attachment hardware element 1 shown in the figures may be a breakaway coupling which is intended to be secured to either end of a strip of fabric to form a lanyard. Such couplings typically come in three sizes, 15mm, 20mm and 25mm. The eyes 2 in this example are slots that are 3-4mm tall and 15-25mm wide, depending on the size of the lanyard that it is produced. It will be understood at the size of the components of the apparatus (such as the loading arm and the rotator holder, as described later on) would be sized to match the dimensions of the couplings. Moreover, it is understood that the same apparatus could be used for different sized attachment hardware elements 1 by simply changing over these components for ones of a different size (e.g. swapping out the loading arm for one that has a larger or smaller dimensions to match the size of the eyes 2).

Starting with Figure 1, the automated loading apparatus 10 includes a receptacle 12 in the form of a bulk hopper. The receptacle 12 includes an entry opening 13a and an exit opening 13b. The receptacle 12 may take any suitable form which permits a plurality of loose attachment hardware elements to be loaded therein. This may be done by hand or it may be automated.

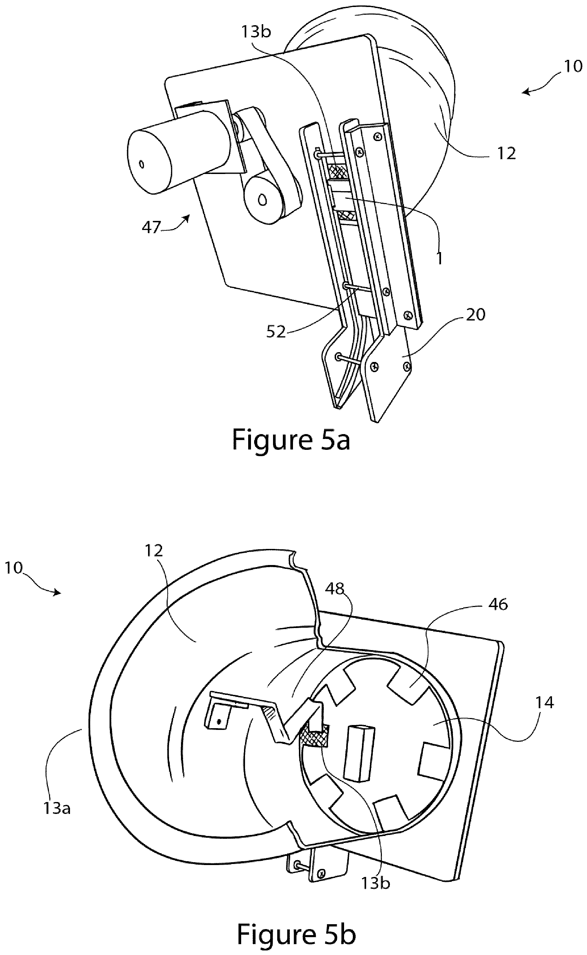

The receptacle 12 includes a sorting member 14, which is described in more detail along with the receptacle 12 later on in relation to Figures 5a and 5b.

The loading apparatus 10 also includes a conveying mechanism 16 in the form of a conveyor belt. The conveying mechanism 16 uses belt(s) 15, motor(s) 17, rollers and/or pulleys to operate in a way that would be known to the skilled person. The conveying mechanism 16 extends in a lengthwise direction L from the receptacle 12 to a receiving member 18. In other embodiments, the conveying mechanism 16 may take any suitable form to transport the attachment hardware element 1 from the receptable 12 to the receiving member 18. For example it may be moved by rollers, or by robotic arm. It may be moved manually, such that the attachment hardware elements 1 are placed in the receiving member 18 by hand, but it is preferable that it is automated.

The loading apparatus 10 further includes a guide member 20 positioned between the sorting member 14 and the conveying mechanism 16, more specifically between the exit opening 13b of the receptable and the conveying mechanism 16.

As shown, the receptacle 12 and the exit opening 13b thereof are positioned above the conveying mechanism 16, such that the guide member 20 extends downwards from the exit opening 13b to the conveying mechanism 16.

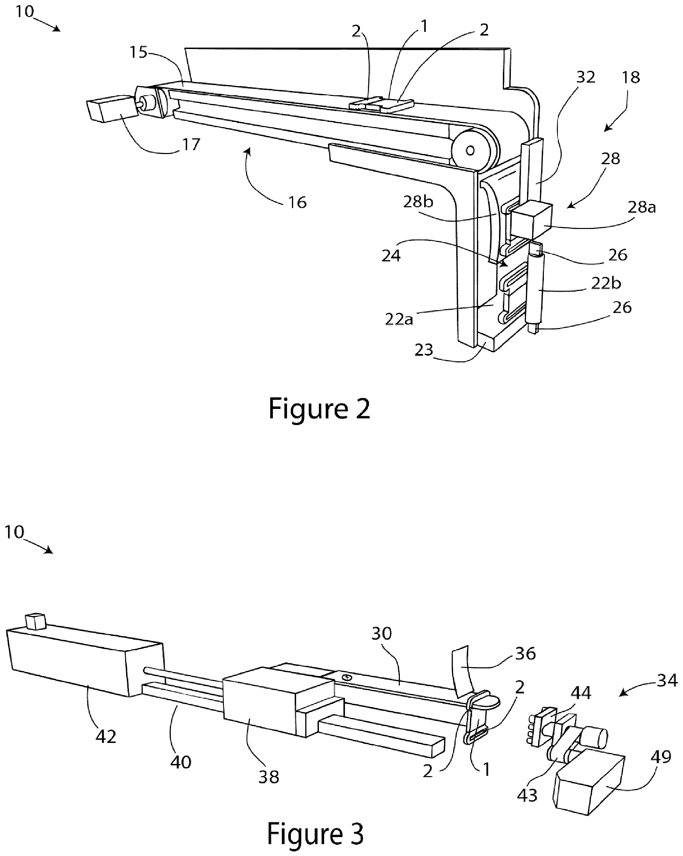

As shown in Figures 1 and 2, the receiving member 18 is located at one end of the conveying mechanism 16 (the opposing end to that of the receptable 12). The receiving member 18 extends substantially perpendicular to the conveying mechanism 16 and as such extends in a heightwise direction H. To say another way, the conveying mechanism 16 extends horizontally and the receiving member 18 extends vertically.

The receiving member 18 includes support members 22a, 22b that create a vertical channel 24 for receiving the attachment hardware element 1. In this embodiment, the vertical channel 24 is created by a rear support member 22a and a front support member 22b which are spaced from one another to create the channel and hold the attachment hardware element 1 in place (in a vertical position). In other words, the attachment hardware element 1 is sandwiched between the two support members 22a, 22b. The vertical channel 24 may include a bottom portion 23 to ensure that the attachment hardware element 1 does not fall out of the channel 24.

The front support member 22b is a moveable support member and in this embodiment the front support member 22b is a spring. The spring 22b is secured to the receiving member 18 at both ends 26 with the spring portion between which is free to be deformed. The spring 22b is biased to be in position relative to the rear support member 22a to create the channel 24. In other words, the spring 22b will return to the position as shown in Figures 1 and 2, and thus create the channel 24 when it is in the rest position. In other embodiments, this may not be the case and the moveable support member may instead have to be returned (e.g. manually or by another mechanism or robotics means) to its original position so as to create the channel 24 ready for the next attachment hardware element 1.

Although only one spring 22b is shown in the figures, it is envisaged that two would be present, arranged in a side by side manner spaced from one another, to ensure that the attachment hardware element 1 is secure in the channel 24.

In other embodiments, there may be additional support members present and they may take a different form. Moreover, in some embodiments, the moveable support member 22b may take any suitable form which permits movement of the support member 22b when force is applied, e.g. it may be on a hinge or be made from a deformable material.

The receiving member 18 includes a sensor 28 that is positioned relative to the receiving member 18 to allow detection of the attachment hardware element 1 entering the vertical channel 24. In this embodiment, the sensor 28 is located near the conveying mechanism 16 so as to detect the attachment hardware element 1 as it enters the receiving member 18. The sensor 28 is therefore located at or towards the top of the receiving member 18 and above the channel 24. The sensor 28 in this embodiment is a light sensor that includes a light sensor unit 28a that faces a white background 28b. It is envisaged that any suitable sensor may be used to detect the presence of the attachment hardware element 1.

All inputs and outputs in this embodiment are controlled by a computer that is running custom code specifically written for these machines. The attachment hardware element 1 passing the light sensor 28 indicates to the program that the attachment hardware element 1 is in a "ready to be loaded" state. When the rest of the apparatus is ready it can then proceed (this is controlled by the computer running the custom code). The light sensor 28 also allows for the detection of jams in the apparatus, e.g. when an attachment hardware element 1 is stuck and does not pass through the light sensor 28. The program then interprets this signal and suspends the apparatus, as well as alerting the operator to ensure no damage is caused.

It will be understood that any suitable control method could be used in order to control operation of the apparatus and interpret signals in an appropriate manner.

The receiving member 18 may further includes a guide element 32, such as that shown in Figure 1 or Figure 2, which help to guide the attachment hardware element 1 from the conveying mechanism 16 into the vertical channel 24 as it drops from the end of the conveying mechanism 16.

The loading arm 30 is shown in Figures 1 and 3. The loading arm 30 is moveable laterally relative to the receiving member 18. In this embodiment, the loading arm 30 is arranged to move substantially perpendicular to the receiving member 18 and therefore moves in a horizontal (or lengthwise L) direction. The loading arm 30 is configured to move in this way so as to contact the attachment hardware element 1 to move the attachment hardware element 1 outwards and away from the vertical channel 24 and towards a rotator holder apparatus 34.

To do this, the loading arm 30 is positioned so that it also dislodges the (or each) moveable support member 22b so as to release the attachment hardware element 1 from the channel 24 and therefore permit movement of the attachment hardware element 1.

In this embodiment, the loading arm 30 contacts the attachment hardware element 1 by inserting a portion of the loading arm 30 through one of the openings 2 (in this example, the top opening). The loading arm 30 shape is complimentary to the shape of the openings 2 and is sized to allow the loading arm 30 to be received by the opening 2 and "catch" the opening 2 so as to move the attachment hardware element 1 as the loading arm 30 moves towards the rotator holder apparatus 34.

In this embodiment, although not shown in the figures, the loading arm 30 includes a stop portion which extends out (i.e. upwards or downwards) from the loading arm 30 and catches the attachment hardware element 1 so as to move the attachment hardware element 1 with movement of the loading arm 30. The loading arm 30 may instead include a clip or claw to catch onto the attachment hardware element 1 (at the opening 2 or elsewhere) so as to move the attachment hardware element 1. Alternatively, the loading arm 30 may taper slightly from the distal end towards the proximal end so that the distal end (i.e. the tip) freely enters the opening 2 and as the loading arm 30 moves through the opening 2, the tapered edges abut the edges of the opening 2 and therefore move the attachment hardware element 1 along with it.

The loading arm 30 is also positioned so that it pushes through the moveable support member 22b as it moves the attachment hardware element 1. The spring 22b deforms (extends) to a point and then slips around the side of the loading arm 30 (as shown in Figure 1). The loading arm 30 may be shaped to encourage this to happen, e.g. it has curved sides as shown in the figures. The spring 22b may instead be configured to extend all the way with the loading arm 30 until it meets the rotator holder apparatus 34.

A contact member 36 is positioned relative to the receiving member 18 and the loading arm 30 to contact the attachment hardware element 1 when it is being moved by the loading arm 30 to provide resistance to the attachment hardware element 1 in the opposite direction of movement of the loading arm 30. In this embodiment, the contact member 36 is a piece of deformable material (such as sheet metal) which is positioned in front of the vertical channel 24, i.e. the front being the side facing outwards towards the rotator holder apparatus 34 - the direction of travel of the attachment hardware element 1. The contact member 36 extends in a vertical manner and is located near to the top portion of the attachment hardware element 1 (although it could be at the bottom portion). Figure 3 shows the contact member 36 slightly deformed just after the loading arm 30 has moved the attachment hardware element 1 past the contact member 36.

The loading arm 30 is powered by a piston 42 which moves along a linear rail 40 while connected to a linear carriage 38. The loading arm 30 may be operated by any suitable means to allow it to move in the desired manner and return to its original position ready for the next attachment hardware element 1.

The loading arm 30 and its components (i.e. piston 42, linear rail 40 and linear carriage 38) extend substantially horizontally, i.e. along a lengthwise L direction. Moreover, they are located beneath and in parallel to the conveying mechanism 16.

In other embodiments, the various members and mechanisms of the whole apparatus 10 may be arranged differently relative to one another and/or may be in different orientations or extend in different directions to that shown in the figures. Although the embodiment shown uses gravity to its advantage, i.e. to permit the attachment hardware element 1 to fall from one apparatus/member to another apparatus/member, this may not be the case.

The rotator holder apparatus 34 is shown in Figures 1, 3 and 4. The rotator holder apparatus 34 includes a rotator holder 44 that is configured to hold the attachment hardware element 1 in place once received by the loading arm 30. In this regard, the rotator holder 44 includes two rows of grips 45 spaced from one another to receive the attachment hardware element 1 between the rows of grips 45. The grips may be rubber or any other suitable material. The rotator holder 44 may use any other suitable means to hold the attachment hardware element 1 in place, such as robotic fingers which open to receive the element 1 and close to hold the element 1 in place, or any other form of clamping mechanism or deformable members.

The rotator holder 44 holds the attachment hardware element 1 so as to expose the eyes 2 ready for securing a textile thereto. To help with this, the rotator holder 44 is configured to rotate so as to present the attachment hardware element 1 in different orientations. Such rotation is carried out by any suitable means such as a belt 43 and motor 49. In this embodiment, because the position of the eyes 2 being at either end of the attachment hardware element 1, the rotator holder 44 is able to rotate at least 180 degrees. It may be able to rotate less or more than this.

The receptable 12 and sorting member 14 are shown in more detail in Figures 5a and 5b. The sorting member 14 is located at the exit opening 13b of the receptable 12, and it has a series of elongate slots 46 which are sized to that or slightly bigger than a single attachment hardware element 1. The sorting member 14 in this embodiment is circular in shape and rotatable, and is located at the bottom of the receptable 12. The slots 46 are shaped so that a single attachment hardware element 1 falls into each of the slot 46 as the sorting member 14 rotates. The slots 46 are spaced around the circumference of the circular sorting ember 14.

There may be other components present to aid in the capture of the attachment hardware elements 1 into each slot 46. Moreover, the sorting member 14 may take any other form which is able to "pick up" each of the attachment hardware elements 1 in turn and present them to the conveying mechanism 16.

The sorting member 14 is rotated by a suitable motor and belt system 47, as can be envisaged by a skilled person.

The sorting member 14 further includes a pusher 48 that is configured to push each attachment hardware element 1 in turn from a given slot 46 when the slot 46 is aligned with a sorting member exit 13b so as to dispense the attachment hardware element 1 from the slot 46. The pusher 48 is a spring style arm that extends through an opening that leads through the sorting member exit 13b. The pusher may take any suitable form.

As shown in Figure 5a, the sorting member exit 13b leads to the guide member 20. In this embodiment, the guide member 20 is a channel that extends from the sorting member exit 13b (which is towards a top end of the guide member 20) downwards onto the conveying mechanism 16. In this way, the effect of gravity allows the attachment textile element 1 to fall from the exit 13b onto the belt of the conveying mechanism 16.

Moreover, the guide member 20 has guide member portions 52 which maintain the orientation of the attachment hardware element 1 from exiting the sorting member 14 and being placed onto the belt of the conveying mechanism 16. In this embodiment, the guide member portions 52 are a series of horizontal bars which extend between the edges of the channel created by the guide member 20 to prevent the attachment hardware element 1 from changing its orientation (e.g. from turning around or turning over).

In use, a plurality of loose attachment hardware elements 1 are loaded (e.g. by hand) into the receptable 12. The sorting member 14 is rotated at the bottom of the receptable 12 and individual attachment hardware elements 1 fall into respective vertical slots 46. A given attachment hardware element 1 is released from its slot 46 by the pusher 48 pushing it through the sorting member exit 13b. The attachment hardware element 1 falls down the guide member 20 and lands onto the conveying mechanism 16.

The sorting member 14 aligns slot 46 with the sorting member exit 13b to allow the attachment hardware element 1 to exit the slot in a vertical position, i.e. upright, and in a lengthwise orientation with the openings 2 at the top and bottom of the attachment hardware element 1. The guide member portions 52 maintain this position and orientation.

When the attachment hardware element 1 reaches the belt 15 of the conveying mechanism 16, it is pulled along and into a flat position but in the same orientation, i.e. it is in the lengthwise direction L with the openings 2 at either end - one opening facing the receiving member 18 (see Figure 2).

The conveying mechanism 16 moves the attachment hardware element 1 along the apparatus in a lengthwise direction L until the element 1 reaches the end of the belt 15. At the end of the belt 15, the attachment hardware element 1 falls from the belt 15 and is received by the vertical channel 24 of the receiving member 18.

Before the attachment hardware element 1 reaches the channel 24, it passes through the sensor 28 which communicates to a controller that the element 1 is going to be ready for moving. This triggers the loading arm 30 for action.

The attachment hardware element 1 is sandwiched between the support members 22a, 22b and bottom portion 23 of the receiving member 18, and is held in place.

The attachment hardware element 1 is presented to the receiving member 18 in the same orientation as it was travelling along the conveying mechanism 16. The attachment hardware element 1 is in the same orientation but is now in a vertical (upright) position.

The loading arm 30 is operated so as to move laterally (in a linear fashion) relative to the receiving member 18. The tip of the loading arm 30 enters the eye 2 of the attachment hardware element 1 (located at the top end) and catches onto the attachment hardware element 1. It then takes the attachment hardware element 1 with it as it continues to move laterally. In doing so, the loading arm 30 contacts the moveable support member 22b and dislodges it to move it out of the way of the attachment hardware element 1. The spring of the moveable support member 22b extends by an amount before slipping off around the curved side of the loading arm 30.

This frees the attachment hardware element 1 so that it is moved outwards and away from the receiving member 18 and towards the rotator holder apparatus 34. In doing so, the attachment hardware element 1 is pushed in the opposite direction by the contact member 36, which ensures that the attachment hardware element 1 is on the loading arm 30. The contact member 36 may push the attachment hardware element 1 further onto the loading arm 30.

The attachment hardware element 1 is received by the rotator holder apparatus 34 and held in place by the grips 45 of the rotator holder 44. The rotator holder 44 is controlled to move the attachment hardware element 1 in line with apparatus that allows for attachment of a textile to the eyes 2 of the attachment hardware element 1, e.g. a lanyard assembly apparatus.

The rotator holder 44 is rotated as required so as to present the eyes 2 to the other assembly apparatus. Moreover, the rotator holder apparatus 34 may include suitable sensors to communicate to the other assembly apparatus that an attachment hardware element 1 is ready.

Meanwhile, the loading arm 30 returns to its original (retracted) position, which releases the spring of the moveable support member 22b to return to its original (rest/undeformed) position. Therefore the vertical channel 24 is created again ready to receive another attachment hardware element 1. The process begins all over again. It will be understood that attachment hardware elements 1 may be released so that there is more than one on the apparatus at a given time.

## Claims

1. An automated loading apparatus for loading a fabric attachment hardware element to a rotator holder apparatus for positioning the attachment hardware element ready for attachment to a fabric, the attachment hardware element having at least one opening for securing the attachment hardware element to the fabric, the loading apparatus comprising:
a receiving member including support members positioned relative to one another to create a channel in which the attachment hardware element is received and retained in use, wherein at least one of the support members is a moveable support member; and
a loading arm moveable laterally relative to the receiving member and configured to, in use, contact the attachment hardware element to move the attachment hardware element towards a rotator holder apparatus, the loading arm further configured to, upon its movement of the attachment hardware element towards the rotator holder apparatus, contact the or each moveable support member to dislodge the or each moveable support member and release the attachment hardware element from the channel so as to permit movement of the attachment hardware element.

2. An automated loading apparatus according to Claim 1 wherein the loading arm is configured to contact the attachment hardware element, in use, at an opening of the attachment hardware element so as to move the attachment hardware element towards the rotator holder apparatus.

3. An automated loading apparatus according to Claim 2 further including a contact member positioned relative to the receiving member to contact the attachment hardware element when it is being moved by the loading arm to provide resistance to the attachment hardware element in the opposite direction of movement of the loading arm.

4. An automated loading apparatus according to any preceding claim wherein the moveable support member is biased to be in position relative to the or each other support members to create the channel.

5. An automated loading apparatus according to any preceding claim further including a sensor positioned relative to the receiving member and configured to detect the passing of an attachment hardware element as it enters the channel.

6. An automated loading apparatus according to any preceding claim wherein the support members of the receiving member are positioned relative to one another so as to create a substantially vertical channel, such that the attachment hardware element is received in a vertical position, preferably wherein the loading arm is configured to move the attachment hardware element outwards and away from the vertical channel.

7. An automated loading apparatus according to any preceding claim further including a conveying mechanism configured to convey an attachment hardware element along a loading path towards the receiving member, wherein the conveying mechanism is oriented substantially horizontally and the receiving member is orientated substantially vertically relative to one another.

8. An automated loading apparatus according to Claim 7 wherein the conveying mechanism and the loading arm are positioned substantially parallel with one another, and the receiving member is positioned therebetween, preferably wherein the loading arm is located beneath the conveying mechanism resulting in a gap between where the attachment hardware element exits the conveying mechanism and where the attachment hardware element enters into position in the channel of the receiving member.

9. An automated loading apparatus according to any preceding claim further including:
a receptacle for holding a plurality of attachment hardware elements in use, and having an entry opening and an exit opening; and
a sorting member positioned at the exit opening of the receptacle and having a series of slots each for receiving a single attachment hardware element in use, the sorting member being moveable to align a given slot with a sorting member exit to dispense the single attachment hardware element for being received by the receiving member.

10. An automated loading apparatus according to Claim 9 wherein the sorting member further includes a pusher configured to push the single attachment hardware element from the given slot when the given slot is aligned with the sorting member exit.

11. An automated loading apparatus according to Claim 9 or Claim 10 when dependent on any one of Claims 8 to 10 wherein the receptacle and sorting member are both positioned at one end of the conveying mechanism opposite to the end at which the receiving member is positioned.

12. An automated loading apparatus according to Claim 11 further including a guide member positioned between the sorting member exit and the conveying mechanism, the guide member being configured to guide an attachment hardware element along the guide member and onto the conveying mechanism.

13. An automated loading apparatus according to Claim 12 wherein the guide member includes a guide member portion configured to guide an attachment hardware element along the guide member and onto the conveying mechanism in an orientation in which the attachment hardware element is presented to the receiving member, preferably wherein the orientation is a lengthwise orientation in which the length direction of the attachment hardware element extends along the length direction of the conveying mechanism with the opening of the attachment hardware element being in line with the receiving member.

14. An automated loading and rotating assembly comprising:
an automated loading apparatus according to any one of the preceding claims; and
an automated rotator holder apparatus positioned relative to the loading arm to receive an attachment hardware element via the loading arm in use, the rotator holder apparatus including a rotatable holder configured to hold the attachment hardware element in place once received by the loading arm, and configured to rotate so as to present the attachment hardware element in desired orientations to allow securing of a fabric to the attachment hardware element in use.

15. A method for loading a fabric attachment hardware element to a rotator holder apparatus, the attachment hardware element having at least one opening for securing the attachment hardware element to a fabric, the method comprising:
positioning an attachment hardware element in a channel created by support members, wherein at least one of the support members is a moveable support member;
moving a moveable arm relative to the receiving member to contact the attachment hardware element to move the attachment hardware element towards a rotator holder apparatus, and, upon such movement, contacting the or each moveable support member to dislodge the or each moveable support member and release the attachment hardware element from the channel so as to permit movement of the attachment hardware element.
